# EUROPEAN PATENT SPECIFICATION

(11) **EP 2 493 137 B1**
(45) Date of publication and mention of the grant of the patent: **16.11.2016**
(21) Application number: 10788694.7
(22) Date of filing: 19.04.2010
(51) Int. Cl.: H04Q 3/00, H04L 29/06, H04M 3/54, H04M 3/436, H04W 4/16

(54) **METHOD AND DEVICE FOR CALL CONTROLLING BASED ON THE INTELLIGENT NETWORK**
VERFAHREN UND VORRICHTUNG ZUR ANRUFSTEUERUNG AUF GRUNDLAGE DES INTELLIGENTEN NETZWERKS
PROCÉDÉ ET DISPOSITIF DE COMMANDE D'APPEL EN FONCTION DU RÉSEAU INTELLIGENT

(30) Priority: 20.10.2009 CN 200910179898
(43) Date of publication of application: 29.08.2012
(73) Proprietor: ZTE Corporation, Shenzhen, Guangdong 518057 (CN)
(72) Inventor: OU, Bing, Shenzhen Guangdong 518057 (CN); LAI, Tianjian, Shenzhen Guangdong 518057 (CN); WANG, Xianguang, Shenzhen Guangdong 518057 (CN)
(74) Representative: Studio Torta S.p.A.
(86) International application number: PCT/CN2010/071897
(87) International publication number: WO 2010/145298

(56) References cited:
- WO-A1-99/35808
- CN-A- 1 852 413
- CN-A- 1 859 730
- US-A1- 2007 041 541
- US-A1- 2008 020 777

## Description

### Field of the Invention

The present invention relates to the communication field, and in particular to a method and apparatus for call control based on intelligent network.

### Background of the Invention

During daily life, when a user receives a call, the following situation always happens: he/she hopes to carry out different answer processes to calling parties according to different calling parties and current conditions of himself/herself, for example, when he/she is inconvenient to answer the call, those important incoming calls can be chosen to be transferred into the voice mailbox, while those unimportant ones can be chosen to be directly rejected; and at any time, the calls from those known harassment numbers can be chosen to be rejected or transferred to relevant authorities for recordal; for some incoming calls, the present call is expected to be processed by the way of being out of service or not being in service area or being powered off and so on; and some other answering modes customized by himself/herself.

The inventors find that there are at least the following problems in the conventional art: the customized answering modes currently available are usually the answering methods that an intelligent network service reads and acquires the pre-configured and fixed answering modes when calling. The user states and answering contents of such methods are relatively single, and the answering strategies are relatively simple, the answering modes are not flexible enough, and the effects of duly selecting and controlling cannot be achieved, thus the methods have great limitation.

WO 99/35808 A1 discloses a telecommunications network, including a service platform, which provides a network based call answering service available to connected telephone lines of the digital network. Where multiple customers are present at a particular line, the service platform is able to associate a message deposited during the call with a particular one of the customers at the line.

### Summary of the Invention

The present invention provides a method and apparatus for call control based on intelligent network so as to solve at least one of the above problems.

A method for call control based on intelligent network is provided according to one aspect of the present invention, which method comprises: configuring a call answering strategy for a terminal when the terminal is a called party, with the call answering strategy comprising a call answering mode; when a call the called party of which is the terminal is received, making a pre-judgment on the received call according to the call answering strategy; and if the result of the pre-judgment is selecting by the terminal, then answering the received call according to a call answering mode inputted by a user through operating the terminal.

Furthermore, the call answering mode comprises directly connecting, call transfer, diverting to the voice mailbox, answering the terminal has been powered off, answering the terminal is not in service area, answering the terminal is busy; the call answering strategy further comprises black and white lists of calling party, priority state and effective time of call answering mode, corresponding calling number or number segment of the call answering mode.

Furthermore, when a call the called party of which is the terminal is received, before making a pre-judgment on the received call according to the call answering strategy, the method further comprises: configuring the starting up of the call answering control of the terminal to be effective and its effective duration; and configuring a specific answering content of the call answering mode.

Furthermore, if the result of the pre-judgment is selecting by the terminal, then answering the received call according to a call answering mode inputted by a user through operating the terminal comprises: taking a configured system number as the calling party to call the terminal externally; if the external call is failed or the answer thereof is failed, then automatically answering the received call according to the call answering strategy; if the terminal answers the external call, then playing a cue tone to the terminal to notify it of the information of the calling terminal of the received call and available call answering modes; receiving the selected call answering mode inputted by the user through operating the terminal; and answering the calling terminal and processing the received call according to the selected call answering mode.

Furthermore, answering the calling terminal and processing the received call according to the selected call answering mode comprises: when the selected call answering mode is directly connecting, then connecting a speech channel between the calling terminal and the terminal to make a call; or when the selected call answering mode is diverting to the voice mailbox, then diverting the speech channel of the received call to a voice mailbox service; or when the selected call answering mode is call transfer, then connecting, according to a target number inputted by the user through operating the terminal, the speech channel of the received call to a terminal corresponding to the target number; or when the selected call answering mode is answering the terminal has been powered off, then ending the call after notifying the calling terminal that the terminal has been powered off by playing a cue tone to the calling terminal; or when the selected call answering mode is answering the terminal is not in service area, then ending the call after notifying the calling terminal that the terminal is not in service area by playing a cue tone to the calling terminal; when the selected call answering mode is the answering the terminal is busy, then ending the call after notifying the calling terminal that the terminal is busy by playing a cue tone to the calling terminal; or when the terminal rejects to answer the received call, automatically answering please hang up to the calling terminal.

Furthermore, in the above method, it further comprises: if the result of the pre-judgment is directly connecting or directly automatic answering, then directly connecting the received call to the terminal or automatically answering the received call according to the call answering strategy; wherein, if the directly connecting is failed or answering the call which is directly connected to the terminal is failed, then automatically answering the received call according to the call answering strategy

Furthermore, automatically answering the received call according to the call answering strategy comprises: matching a call answering strategy in the configured call answering strategy; notifying the calling terminal of the corresponding specific content of the call answering mode of the matched the call answering strategy; and ending the call.

An apparatus for call control based on intelligent network is provided according to another aspect of the present invention, which apparatus comprises: a configuration module, which is configured to configure a call answering strategy for a terminal when the terminal is the called party, with the call answering strategy comprising a call answering mode; a pre-judgment module, which is configured to, when a call from the terminal is received, make a pre-judgment on the received call according to the call answering strategy; and an answer control processing module, which is configured to answer the received call according to a call answering mode inputted by a user through operating the terminal, when the result of the pre-judgment is selecting by the terminal.

Furthermore, the answer control processing module comprises: a call attempt unit, which is configured to call the terminal externally by taking a system number configured in the configuration module as the calling party; and an answer implementing unit, which is configured to automatically answer the received call according to the call answering strategy when the external call is failed or the answer thereof is failed; the answer implementing unit is further configured to play a cue tone to the terminal to notify it of the information of a calling terminal of the received call and available call answering modes when the terminal answers the external call; the answer implementing unit is further configured to receive a selected call answering mode inputted by a user through operating the terminal; the answer implementing unit is further configured to answer the calling terminal and process the received call according to the selected call answering mode.

Furthermore, the answer implementing unit is further configured to connect a speech channel between the calling terminal and the terminal to make a call when the selected call answering mode is directly connecting; or the answer implementing unit is further configured to divert the speech channel of the received call to a voice mailbox service when the selected call answering mode is diverting to the voice mailbox; or the answer implementing unit is further configured to connect, according to a target number inputted by the user through operating the terminal, the speech channel of the received call to a terminal corresponding to the target number when the selected call answering mode is call transfer; or the answer implementing unit is further configured to end the call after notifying the calling terminal that the terminal has been powered off by playing a cue tone to the calling terminal when the selected call answering mode is answering the terminal has been powered off; or the answer implementing execution unit is further configured to end the call after notifying the calling terminal that the terminal is not in service area by playing a cue tone to the calling terminal when the selected call answering mode is answering the terminal is not in service area; or the answer implementing unit is further configured to end the call after notifying calling terminal that the terminal is busy by playing a cue tone to the calling terminal when the selected call answering mode is answering the terminal is busy; or the answer implementing unit is further configured to automatically answer please hang up to the calling terminal when the terminal rejects to answer the received calL

Furthermore, the answer implementing unit is further configured to directly connect the received call to the terminal or automatically answer the received call according to the call answering strategy when the result of the pre-judgment of the pre-judgment module is the directly connecting or directly automatic answering; wherein, if the directly connecting is failed or answering the call which is directly connected to the terminal is failed, the answer implementing unit is further configured to automatically answer the received call according to the call answering strategy

Furthermore, the answer implementing unit is further configured to match a call answering strategy in the configured call answering strategy; and end the call after notifying the calling terminal of the corresponding specific content of the call answering mode of the matched call answering strategy.

Furthermore, the pre-judgment module and the answer control processing module are realized by a service control point of an intelligent network.

According to the above technical solution of the present invention, the called user can duly select an appropriate answering mode according to the situation of the currently received call and his/her own wishes, thus the problem that the answering modes in the conventional art are not flexible enough and the call answering mode cannot be duly selected is solved, so personalized answer can be well achieved and the incoming calls are all in control, and when the user receives a call, he/she can duly select an answering mode for this call according to the calling number of the call and his/her current surrounding situation and current wishes.

### Brief Description of the Drawings

The drawings illustrated here provide a further understanding of the present invention and form a part of the present application. The exemplary embodiments and the description thereof are used to explain the present invention without unduly limiting the scope of the present invention. In the drawings:
Fig. 1 shows a flowchart of a method for call control based on intelligent network according to an embodiment of the present invention;
Fig. 2 shows a schematic diagram of an apparatus for call control based on intelligent network according to an embodiment of the present invention;
Fig. 3 shows a schematic diagram of an application network of a method for call control based on intelligent network according to a preferred embodiment of the present invention; and
Fig. 4 shows a process flowchart of a method for call control based on intelligent network according to a preferred embodiment of the present invention.

### Detailed Description of Embodiments

The present invention will be described hereinafter in detail with reference to the drawings and in conjunction with the embodiments.

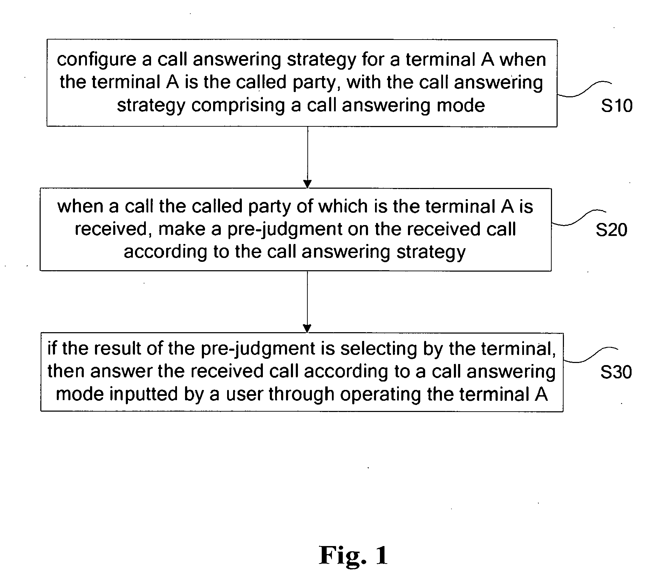

Fig. 1 shows a flowchart of a method for call control based on intelligent network according to an embodiment of the present invention, which comprises the following steps:
Step S10: configure a call answering strategy for a terminal A when the terminal A is the called party, with the call answering strategy comprising a call answering mode;
Step S20: when a call the called party of which is the terminal A is received, make a pre-judgment on the received call according to the call answering strategy; and
Step S30: if the result of the pre-judgment is selecting by the terminal, then answer the received call according to a call answering mode inputted by a user through operating the terminal A.

In this case, the above call answering mode comprises directly connecting, call transfer, diverting to the voice mailbox, answering the terminal has been powered off, answering the terminal is not in service area, answering the terminal is busy; the call answering strategy further comprises black and white list of calling party, priority state and effective time of call answering mode, corresponding calling number or number segment of the call answering mode.

By virtue of this embodiment, the called user can duly select an appropriate answering mode according to the situation of the currently received call and his/her own wishes, thus personalized answering can be well achieved and the incoming calls are all in control, so when the user receives a call, he/she can duly select an answering mode for this call according to the calling number of the call and his/her current surrounding situation and current wishes.

Preferably, before the step S20, the method further comprises: configure the starting up of the call answering control of the terminal Ato be effective and its effective duration; and configure the specific answering content of the call answering mode.

Preferably, the step S30 comprises: take a configured system number as the calling party to call the terminal externally; if the external call is failed or the answer thereof is failed, then automatically answer the received call according to the call answering strategy; if the terminal A answers the external call, then play a cue tone to the terminal A to notify it of the information of a calling terminal B of the received call and available call answering modes; receive the selected call answering mode inputted by a user through operating the terminal A; and answer the calling terminal B and process the received call according to the selected call answering mode.

In this case, answer the calling terminal B and process the received call according to the selected call answering mode comprises: when the selected call answering mode is directly connecting, then connect a speech channel between the calling terminal B and the terminal A to make a call; or when the selected call answering mode is diverting to the voice mailbox, then divert the received call to a voice mailbox service; or when the selected call answering mode is call transfer, then connect, according to a target number inputted by the user through operating the terminal A, the speech channel of the received call to a terminal corresponding to the target number; or when the selected call answering mode is answering the terminal has been powered off, then end the call after notifying the calling terminal B that the terminal A has been powered off by playing a cue tone to the calling terminal B; or when the selected call answering mode is answering the terminal is not in service area, then end the call after notifying the calling terminal B that the terminal A is not in service area by playing a cue tone to the calling terminal B; or when the selected call answering mode is the answering the terminal is busy, then end the call after notifying the calling terminal B that the terminal A is busy by playing a cue tone to the calling terminal B; or when the terminal A rejects to answer the received call, automatically answer please hang up to the calling terminal B.

This preferred embodiment provides a specific embodiment of answering a received call according to the call answering mode inputted by the user through operating the terminal when the result of the pyre-judgment is selecting by the terminal A (called terminal).

Preferably, in the above method, it further comprises: if the result of the pre-judgment is directly connecting or directly automatic answering, then directly connect the received call to the terminal A or automatically answer the received call according to the call answering strategy.

In this case, directly connect the received call to the terminal A according to the call answering strategy comprises: if the directly connecting is failed or answering the call which is directly connected to the terminal A is failed, then automatically answer the received call according to the call answering strategy; and if the terminal A answers the call which is directly connected thereto, then connect a speech channel between the calling terminal B and the terminal A to make a call.

The above preferred embodiment provides a specific embodiment when the result of the pre-judgment is that it does not need the user to carry out further selection.

Preferably, in the above preferred embodiment, automatically answer the received call according to the call answering strategy comprises: match a call answering strategy in the configured call answering strategy; notify the calling terminal B of the corresponding specific content of the call answering mode of the matched the call answering strategy; and end the call.

This preferred embodiment provides a particular embodiment when the directly connecting of the call to the terminal A is failed, the externally calling to the terminal A is failed or the answering thereof is failed, and when the result of the pre-judgment is directly automatic answering.

Preferably, the mode of configuring a call answering strategy for the terminal A when the terminal A is the called party at least comprises one of the following: configure through a WEB portal; or configure through an interaction voice service; or configure through a short message instruction. In this way, the user can use various modes to carry out configuration, such as surfing the Internet, making a call or sending a short message and so on.

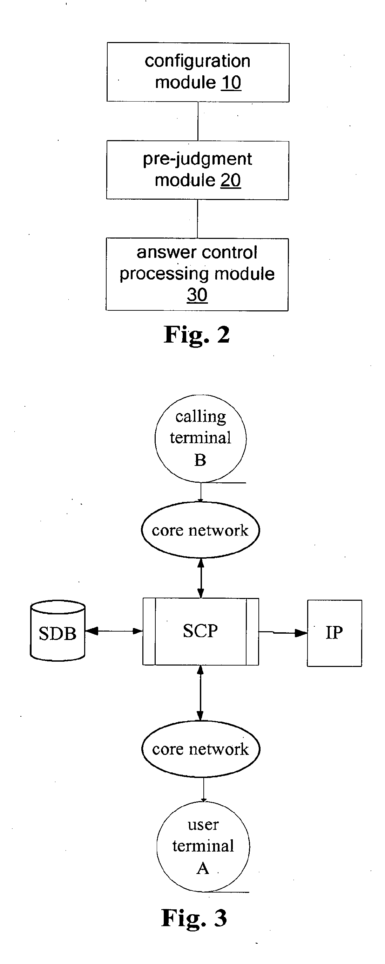

Fig. 2 shows a schematic diagram of an apparatus for call control based on intelligent network according to an embodiment of the present invention, which apparatus comprises: a configuration module 10, for configuring a call answering strategy for a terminal A when the terminal A is the called party, with the call answering strategy comprising a call answering mode; a pre-judgment module 20, which is configured to, when a call from the terminal A is received, make a pre-judgment on the received call according to the call answering strategy; and an answer control processing module 30, which is configured to answer the received call according to a call answering mode inputted by a user through operating the terminal A when the result of the pre-judgment of the pre-judgment module 20 is selecting by the terminal.

In this embodiment, since the called user (i.e. the above terminal A) duly selects an appropriate answering mode according to the situation of the currently received call and his/her own wishes, thus personalized answer can be well achieved and the incoming calls are all in control. When a user receives a call, he/she can duly select an answering mode for this call according to the calling number of the call and his/her current surrounding situation and current wishes.

Preferably, the answer control processing module 30 comprises:
a call attempt unit 301, which is configured to call the terminal A externally by taking a system number configured in the configuration module as the calling party; and
an answer implementing unit 302, which is configured to automatically answer the received call according to the call answering strategy when the external call is failed or the answer thereof is failed; the answer implementing unit 302 is further configured to play a cue tone to the terminal A to notify it of the information of a calling terminal B of the received call and available call answering modes when the terminal A answers the external call; receive a selected call answering mode inputted by a user through operating the terminal A; and answer the calling terminal B and process the received call according to the selected call answering mode.

In this case, the answer implementing unit 302 is further configured to connect a speech channel between the calling terminal B and the terminal A to make a call when the selected call answering mode is directly connecting; or the answer implementing unit 302 is further configured to divert the speech channel of the received call to a voice mailbox service when the selected call answering mode is diverting to the voice mailbox; or the answer implementing unit 302 is further configured to connect, according to a target number inputted by the user through operating the terminal A, the speech channel of the received call to a terminal corresponding to the target number when the selected call answering mode is call transfer; or the answer implementing unit 302 is further configured to end the call after notifying the calling terminal B that the terminal A has been powered off by playing a cue tone to the calling terminal B when the selected call answering mode is the answering the terminal has been powered off; or the answer implementing unit 302 is further configured to end the call after notifying the calling terminal B that the terminal A is not in service area by playing a cue tone to the calling terminal B when the selected call answering mode is answering the terminal is not in service area; or the answer implementing unit 302 is further configured to end the call after notifying the calling terminal B that the terminal A is busy by playing a cue tone to the calling terminal B when the selected call answering mode is answering the terminal is busy; or the answer implementing unit 302 is further configured to automatically answer please hang up to the calling terminal B when the terminal A rejects to answer the received call.

This preferred embodiment provides a specific embodiment of the answer control processing module answering a received call according to the call answering mode inputted by the user through operating the terminal when the result of the pre-judgment is selecting by the terminal A (called terminal).

Preferably, the answer implementing unit 302 is further configured to connect the received call directly to the terminal A or automatically answer the received call according to the call answering strategy when the result of the pre-judgment of the pre-judgment module 20 is directly connecting or automatic answering.

Preferably, the answer implementing unit 302 is further configured to automatically answer the received call according to the call answering strategy when the directly connecting is failed or answering the call which is directly connected to the terminal is failed; and when the terminal A answers the call which is directly connected to the terminal A, connect a speech channel between the calling terminal B and the terminal A to make a call.

The above preferred embodiment provides a particular embodiment when the result of the pre-judgment is that it does not need the user to carry out further selection.

Preferably, the answer implementing unit 302 is further configured to match a call answering strategy in the configured call answering strategy; and end the call after notifying the calling terminal B of the corresponding specific content of the call answering mode of the matched call answering strategy.

This preferred embodiment provides a particular embodiment when the directly connecting of the call to the terminal A is failed, the externally calling to the terminal A is failed or the answering thereof is failed, and when the result of the pre-judgment is directly automatic answering.

Preferably, the pre-judgment module 20 and the answer control processing module 30 are realized by a service control point of an intelligent network. In this way, the intelligent network can be used to flexibly control and select the answering mode of a call when receiving this call.

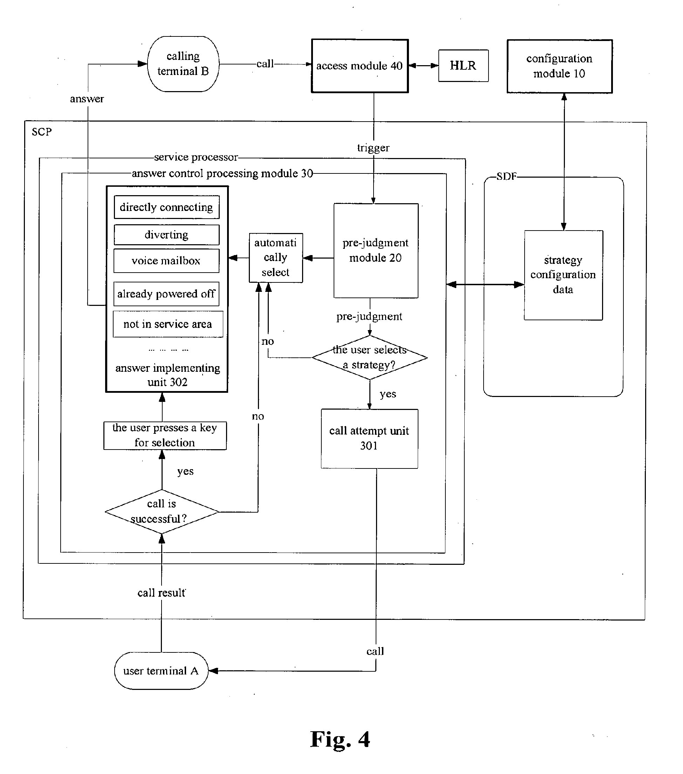

Fig. 3 shows a schematic diagram of an application network of a method for call control based on intelligent network according to a preferred embodiment of the present invention, and Fig. 4 shows a process flowchart of a method for call control based on intelligent network according to a preferred embodiment of the present invention, which comprises the following steps:
a service switching point (SSP), a home location register (HLR), a service control point (SCP); the service control point (SCP) comprises: two function entities of SCF (service control function) and SDF (service data function), in which the SCF is mainly realized by a service processor; and in this method, the intelligent network value-added service for implementing the method to which the called user subscribes is configured on the HLR through user registration; the public land mobile network (PLMN) or the public switched telephone network (PSTN) are used as the core network to receive a call to the user terminal A and enter the SCP through SSP trigger according to the called subscription of the user HLR; the pre-judgment module 20 of the SCP reads the configuration information of this user terminal A in the SDF and makes a pre-judgment on the answering strategy of this call; determines whether the answering mode is selected by the user manually or the system select it automatically according to the result of the pre-judgment; to the situation that the user selects manually, the call attempt unit 301 calls the user, and the user presses a button to select a answering mode after the connecting is successful, otherwise, the system automatically selects an answering mode for the calling terminal B.
   Step a: subscribe the user terminal A to the answer control service platform of the intelligent network and implement personalized configuration on system switch, calling black and white lists setting, priority state and affective duration of the answering mode adjustment and the function and answering content of the specific answering mode of the answer implementing unit 302 to this user and so on by using the configuration module 10. The above configuration data are stored into the database of the SDF.
      In particular, when a user registers, the system sets the intelligent network value-added service for implementing this method which the called user subscribes on the HLR. Then, configure the specific function of the answer implementing unit 302 of this user through the configuration module 10, i.e. the answering modes that the user can select. And, the calling number or number segment corresponding to each answering mode and the duration limitation of the corresponding call of the user can also be configured. The mobile phone switched network (PLMN) or public switched telephone network (PSTN) are used as the core network to enter the SCP through SSP trigger according to the called subscription of the user HLR after receiving a call to the user.
      The configuration module 10 consists of one or more setting modes such as WEB portal, IVR (Interactive Voice Response) user interaction management, short message instruction processing and so on; the configuration module 10 implements data interaction with the answer control processing module 30 through the database, it is configured to set system switch, set calling black and white lists, adjust priority state and affective duration of the answering mode, and implement configurations such as adding, deleting, modifying to the specific answering mode and answering content of the answer implementing unit 302.
   Step b: the calling terminal B initiates a call to this user terminal A, an access module 40 enters the answer control service using the called subscription trigger; and the answer control service plays a connecting cue tone to the calling party B: Connecting for you, please wait.
   Step c: the pre-judgment module 20 of the intelligent network SCP reads the data pre-configured by the configuration module 10 according to the received information, and determines whether this call should be directly connected to the user terminal A or it needs to the user terminal A to select an answering mode or it needs to be automatically answered without calling the user terminal A, if the result of the pre-judgment is that the current call can be directly connected to the user terminal A, then take the current calling terminal B as the calling party to call the user terminal A, if the call or the answer thereof is failed, then directly go to Step f, otherwise go to Step d; if the result of the pre-judgment is that it needs the user to further select a mode, then go to Step e; and if the result of the pre-judgment is directly automatic answering, then go to Step f.
   Step d: the answer control service mobilizes the answer processing mode of directly connecting in the answer implementing unit 302 to connect the speech channel of the calling terminal B and that of the user terminal A to make a call and complete this processing.
   Step e: the answer control service mobilizes the call attempt unit 301 and inquires the information of this calling party configured by the configuration module 10, if there is no corresponding calling information, such as name and so on, the number is directly prompt, then the system calling party configured by the configuration module 10 is used to externally call the user terminal A, if the external call or the answer thereof is failed, then go to Step f, the calling terminal B is directly automatically answered; if the user terminal A answers, then prompt the user with the following voices and at the same time receive the user key: someone/number XXXXXXXXXX is calling you now, directly answer please press 1, transfer to the voice mailbox please press 2, transfer to another number please press 3, answer the terminal is powered off please press 4, answer the terminal is not in service area please press 5, answer the terminal is busy please press 6, and not receive and directly answer please hung up. If the user directly hangs up, then go to Step f; after the user presses a key, stop playing the cue tone; if the user presses key 1, then go to Step d; if the user presses key 2, then go to Step g; if the user presses key 3, then go to Step h; if the user presses key 4, then go to Step i; if the user presses key 5, then go to Step j; and if the user presses key 6, then go to Step k.
   Step f: the answer control service mobilizes the automatic answering processing mode in the answer implementing unit 302, determines a specific answering prompt content according to the data configured by the above configuration module 10, prompts the calling terminal B, and ends this call.
   Step g: the answer control service mobilizes the answer processing mode of diverting to the voice mailbox in the answer implementing unit 302, diverts the speech channel to the voice mailbox service, prompts the calling terminal B to leave a message, and ends this call.
   Step h: the answer control service calls the answer processing mode of transferring to another number in the answer implementing unit 302, prompts the user terminal A to input the target number, implements a directly connecting to the target number by taking the current calling terminal B as the calling party, and completes this call.
   Step i: the answer control service mobilizes the function of answering the terminal is power off in the answer implementing unit 302, and prompts the calling terminal B that: the number you dialed is power off, please dial again later. Then, this call is ended.
   Step j: the answer control service mobilizes the function of answering the terminal is not in service area in the answer implementing unit 302, and prompts the calling terminal B that: the number you dialed is not in service area, it cannot be connected for you. Then, this call is ended.
   Step k: the answer control service mobilizes the function of answering the terminal is busy in the answer implementing unit 302, and prompts the calling terminal B that: the number you dialed is busy, please dial again later. Then, this call is ended.

As the core of the present invention, the answer control processing module 30 and the pre-judgment module 20 loaded onto the intelligent network SCP for achieving the intelligent network value-added service and they are triggered to start up by the called subscription of the call; the SCP comprises: a pre-judgment module 20, an call attempt unit 301 and an answer implementing unit 302. The pre-judgment module 20 reads the configuration data written into the database by the user through the above configuration module 10, determines an answering mode or determines an answering mode according to the acquired result of the attempting call of the call attempt unit 301 and the selection of the user. Then, answer processing is implemented to this call through the answer implementing unit 302 according to the determined answering mode. The pre-judgment module 20 first needs to implement a preliminary pre-judgment according to the configuration so as to determine whether this call should be directly connected to the user terminal A or it needs the user to select an answering mode or needs to be directly automatically answered without calling the user. If result is that it needs the user to select an answering mode, then implement an attempting call to the user terminal A through the call attempt unit 301, and after it is connected, prompt the user of the current call information and acquire the selection of the user to determine an answering mode. After the above process has determined the answering mode, the answer execution unit 302 realizes the corresponding answer to the calling terminal B. The answer implementing unit 302 is a function module comprising various specific processing modes of answering the calling party, such as function of directly connecting, function of transferring to other number, function of diverting to the voice mailbox to leave a message, function of transferring to other number, function of answering the terminal is power off, function of answering the terminal is not in service area, function of answering the terminal is user being busy, and so on.

The above pre-judgment module 20 and the answer control processing module 30 are realized by a service processor in the SCP of the intelligent network.

In the above preferred embodiments, the user number is subscripted to the answer processing service of the intelligent network when being called, when the user receives a call, the user selects to use which expected answering mode to answer this call at this moment by himself/herself, and the user state, answering content and answering strategy are richer, the answering mode is more flexible, thus the effects of duly selecting and controlling is achieved, which has more extensive applicability.

The above Step a comprises:
Step a1: the PSTN (Public Switched Telephone Network)/PLMN (Public Land Mobile Network) user is triggered to enter the answer control service through the access module 40 using currently available telephone terminal; and
Step a2: the configuration module 10 configures the control parameters and can make this answer control to be effective or not; can configure the effective duration; and can configure the specific content of each function of the automatic answering and so on.

Compare to the conventional art, the method for achieving user control answer using the intelligent network provided by the present invention uses the intelligent network subscription and pre-enters the intelligent network service, and the intelligent network service extends the function of the called party processing the current call, which enables the user to have all incoming calls under his/her control, so the user is facilitated, and the realization of it is convenient and the engineering implementation is relatively easy. This method enables the user to flexibly and duly process all his/her incoming calls by himself/herself and enables the user to truly control and process all his/her incoming calls. Thus, it is ensured that all the calls are under the control of the called user, which facilitates the user, and the realization of it is convenient and the engineering implementation is relatively easy.

Apparently, those skilled in the art shall understand that the above-mentioned modules and steps of the present invention can be realized by using general purpose calculating device, can be integrated in one calculating device or distributed on a network which consists of a plurality of calculating devices, and alternatively they can be realized by using the executable program code of the calculating device, so that consequently they can be stored in the storing device and executed by the calculating device, or they are made into integrated circuit module respectively, or a plurality of modules or steps thereof are made into one integrated circuit module. In this way, the present invention is not limited to any particular combination of hardware and software.

Above description is only to illustrate the preferred embodiments but not to limit the present invention. Various alterations and changes to the disclosed embodiments are apparent to those skilled in the art, without departing from the scope of the present invention, as defined in the appended claims.

## Claims

1. A method for call control based on intelligent network, the method comprising:
configuring (S10) a call answering strategy for a terminal when the terminal is a called party, with the call answering strategy comprising a call answering mode; and
when a call the called party of which is the terminal is received, making (S20) a pre-judgment on the received call according to the call answering strategy,
**characterized in that** the method further comprises:
if the result of the pre-judgment is selecting by the terminal, then answering (S30) the received call according to a call answering mode inputted by a user through operating the terminal.

2. The method according to claim 1, wherein the call answering mode comprises directly connecting, call transfer, diverting to the voice mailbox, answering the terminal has been powered off, answering the terminal is not in service area, answering the terminal is busy; the call answering strategy further comprises black and white lists of calling party, priority state and effective time of call answering mode, corresponding calling number or number segment of the call answering mode.

3. The method according to claim 1, wherein, when a call the called party of which is the terminal is received, before making (S20) a pre-judgment on the received call according to the call answering strategy, the method further comprises:
configuring the starting up of the call answering control of the terminal to be effective and its effective duration; and
configuring a specific answering content of the call answering mode.

4. The method according to claim 2, wherein if the result of the pre-judgment is selecting by the terminal, then answering (S30) the received call according to a call answering mode inputted by a user through operating the terminal comprises:
taking a configured system number as the calling party to call the terminal externally;
if the external call is failed or the answer thereof is failed, then automatically answering the received call according to the call answering strategy;
if the terminal answers the external call, then playing a cue tone for the terminal to notify it of the information of the calling terminal of the received call and available call answering modes;
receiving the selected call answering mode inputted by the user through operating the terminal; and
answering the calling terminal and processing the received call according to the selected call answering mode.

5. The method according to claim 4, wherein answering the calling terminal and processing the received call according to the selected call answering mode comprises:
when the selected call answering mode is the directly connecting, then connecting a speech channel between the calling terminal and the terminal to make a call; or
when the selected call answering mode is the diverting to the voice mailbox, then diverting the speech channel of the received call to a voice mailbox service; or
when the selected call answering mode is the call transfer, then connecting, according to a target number inputted by the user through operating the terminal, the speech channel of the received call to a terminal corresponding to the target number; or
when the selected call answering mode is the answering the terminal has been powered off, then ending the call after notifying the calling terminal that the terminal has been powered off by playing a cue tone to the calling terminal; or
when the selected call answering mode is the answering the terminal is not in service area, then ending the call after notifying the calling terminal that the terminal is not in service area by playing a cue tone for the calling terminal; or
when the selected call answering mode is the answering the terminal is busy, then ending the call after notifying the calling terminal that the terminal is busy by playing a cue tone to the calling terminal; or
when the terminal rejects to answer the received call, automatically answering please hang up to the calling terminal.

6. The method according to claim 1, wherein the method further comprises:
if the result of the pre-judgment is directly connecting or directly automatic answering, then directly connecting the received call to the terminal or automatically answering the received call according to the call answering strategy;
wherein, if the directly connecting is failed or answering the call which is directly connected to the terminal is failed, then automatically answering the received call according to the call answering strategy.

7. The method according to claim 4 or 6, wherein automatically answering the received call according to the call answering strategy comprises:
matching a call answering strategy in the configured call answering strategy;
notifying the calling terminal of the corresponding specific content of the call answering mode of the matched the call answering strategy; and
ending the call.

8. An apparatus for call control based on intelligent network, the apparatus comprising:
a configuration module (10), configured to configure a call answering strategy for a terminal when the terminal is the called party, with the call answering strategy comprising a call answering mode; and
a pre-judgment module (20), configured to, when a call from the terminal is received, make a pre-judgment on the received call according to the call answering strategy,
**characterized in that** the apparatus further comprises:
an answer control processing module (30), configured to answer the received call according to a call answering mode inputted by a user through operating the terminal when the result of the pre-judgment of the pre-judgment module is selecting by the terminal.

9. The apparatus according to claim 8, wherein the answer control processing module (30) comprises:
a call attempt unit (301), configured to call the terminal externally by taking a system number configured in the configuration module as the calling party; and
an answer implementing unit (302), configured to automatically answer the received call according to the call answering strategy when the external call is failed or the answer thereof is failed; further configured to play a cue tone to the terminal to notify it of the information of a calling terminal of the received call and available call answering modes when the terminal answers the external call; to receive a selected call answering mode inputted by a user through operating the terminal; and to answer the calling terminal and process the received call according to the selected call answering mode.

10. The apparatus according to claim 9, wherein the answer implementing unit (302) is further configured to connect a speech channel between the calling terminal and the terminal to make a call when the selected call answering mode is directly connecting; or
the answer implementing unit (302) is further configured to divert the speech channel of the received call to a voice mailbox service when the selected call answering mode is diverting to the voice mailbox; or
the answer implementing unit (302) is further configured to connect, according to a target number inputted by the user through operating the terminal, the speech channel of the received call to a terminal corresponding to the target number when the selected call answering mode is call transfer; or
the answer implementing unit (302) is further configured to end the call after notifying the calling terminal that the terminal has been powered off by playing a cue tone to the calling terminal when the selected call answering mode is answering the terminal has been powered off; or
the answer implementing unit (302) is further configured to end the call after notifying the calling terminal that the terminal is not in service area by playing a cue tone to the calling terminal when the selected call answering mode is answering the terminal is not in service area; or
the answer implementing unit (302) is further configured to end the call after notifying the calling terminal that the terminal is busy by playing a cue tone to the calling terminal when the selected call answering mode is answering the terminal is busy; or
the answer implementing unit (302) is further configured to automatically answer please hang up to the calling terminal when the terminal rejects to answer the received call.

11. The apparatus according to claim 9, wherein the answer implementing unit (302) is further configured to directly connect the received call to the terminal or automatically answer the received call according to the call answering strategy when the result of the pre-judgment of the pre-judgment module is the directly connecting or directly automatic answering;
wherein, if the directly connecting is failed or answering the call which is directly connected to the terminal is failed, the answer implementing unit is further configured to automatically answer the received call according to the call answering strategy.

12. The apparatus according to claim 9 or 11, wherein the answer implementing unit (302) is further configured to match a call answering strategy in the configured call answering strategy; and end the call after notifying the calling terminal of the corresponding specific content of the call answering mode of the matched in the call answering strategy.

13. The apparatus according to claim 8, wherein the pre-judgment module (20) and the answer control processing module (30) are realized by a service control point (SCP) of an intelligent network.

## Patentansprüche

1. Verfahren zur Anruf-Steuerung, basierend auf einem intelligenten Netzwerk, wobei das Verfahren umfasst:
Konfigurieren (S10) einer Anruf-Beantwortungs-Strategie für einen Anschluss, wenn der Anschluss ein angerufener Teilnehmer ist, wobei die Anruf-Beantwortungs-Strategie einen Anruf-Beantwortungs-Modus umfasst; und
wenn ein Anruf, dessen angerufener Teilnehmer der Anschluss ist, empfangen wird, Ausführung (S20) einer vorausgehenden Beurteilung hinsichtlich des empfangenen Anrufs gemäß der Anruf-Beantwortungs-Strategie,
**dadurch gekennzeichnet, dass** das Verfahren weiterhin umfasst:
wenn das Ergebnis von der vorausgehenden Beurteilung Auswählen durch den Anschluss ist, dann Beantwortung (S30) des empfangenen Anrufs gemäß einem Anruf-Beantwortungs-Modus, der durch Bedienen des Anschlusses von einem Benutzer eingegeben wurde.

2. Verfahren nach Anspruch 1, wobei der Anruf-Beantwortungs-Modus direktes Verbinden, Rufweiterleitung, Umleiten zur Sprach-Mailbox, Antworten der Anschluss wurde abgeschaltet, Antworten der Anschluss liegt nicht im Service-Bereich, Antworten der Anschluss ist besetzt, umfasst; wobei die Anruf-Beantwortungs-Strategie weiterhin schwarze und weiße Listen anrufender Teilnehmer, Prioritäts-Status und effektiver Zeit des Anruf-Beantwortungs-Modus, entsprechend Rufnummer oder Nummern-Segment des Anruf-Beantwortungs-Modus umfasst.

3. Verfahren nach Anspruch 1, wobei, wenn ein Anruf, dessen angerufener Teilnehmer der Anschluss ist, empfangen wird, bevor (S20) eine vorausgehende Beurteilung hinsichtlich des empfangenen Anrufs gemäß der Anruf-Beantwortungs-Strategie getätigt wurde, das Verfahren weiterhin umfasst:
Konfigurieren der Inbetriebnahme der Anruf-Beantwortungs-Steuerung des Anschlusses, um wirksam zu sein und seine wirksame Dauer; und
Konfigurieren eines speziellen Beantwortungs-Inhalts des Anruf-Beantwortungs-Modus.

4. Verfahren nach Anspruch 2, wobei, wenn das Ergebnis der vorausgehenden Beurteilung Auswählen von dem Anschluss ist, dann die Beantwortung (S30) des empfangenen Anrufs gemäß einem Anruf-Beantwortungs-Modus, eingegeben vom Benutzer über die Bedienung des Anschlusses, umfasst:
Nehmen einer konfigurierten System-Nummer als anrufender Teilnehmer zum externen Anruf des Anschlusses;
wenn der externe Anruf gescheitert ist oder das Antworten darauf gescheitert ist, dann automatische Beantwortung des empfangenen Anrufs gemäß der Anruf-Beantwortungs-Strategie;
wenn der Anschluss den externen Anruf beantwortet, dann Abspielen eines Hinweis-Tons für den Anschluss, um ihn von der Information des anrufenden Anschlusses von dem empfangenen Anruf und verfügbaren Anruf-Beantwortungs-Modi zu benachrichtigen;
Empfangen des ausgewählten Anruf-Beantwortungs-Modus, eingegeben von dem Benutzer durch Bedienung des Anschlusses und
Beantwortung des anrufenden Anschlusses und Verarbeitung des empfangenen Anrufs gemäß dem ausgewählten Anruf-Beantwortungs-Modus.

5. Verfahren nach Anspruch 4, wobei Beantwortung des anrufenden Anschlusses und Verarbeitung das empfangenen Anrufs gemäß dem ausgewählten Anruf-Beantwortungs-Modus umfasst:
wenn der ausgewählte Anruf-Beantwortungs-Modus die direkte Verbindung ist, dann Verbinden eines Sprach-Kanals zwischen dem anrufenden Anschluss und dem Anschluss, um einen Anruf zu tätigen; oder
wenn der ausgewählte Anruf-Beantwortungs-Modus das Umleiten zur Sprach-Mailbox ist, dann Umleiten des Sprach-Kanals von dem empfangenen Anruf zu einem Sprach-Mailbox-Service; oder
wenn der ausgewählte Anruf-Beantwortungs-Modus die Rufweiterleitung ist, dann Verbinden gemäß einer Ziel-Nummer, die vom Benutzer über die Bedienung des Anschlusses eingegeben wird, des Sprach-Kanals vom empfangenen Anruf zu einem Anschluss entsprechend der Ziel-Nummer; oder
wenn der ausgewählte Anruf-Beantwortungs-Modus die Beantwortung des Anschlusses, der abgeschaltet wurde, ist, dann Beenden des Anrufs nach Mitteilen dem anrufenden Anschluss, dass der Anschluss abgeschaltet wurde, durch Abspielen eines Hinweis-Tons an den anrufenden Anschluss oder
wenn der ausgewählte Anruf-Beantwortungs-Modus die Beantwortung ist, dass der Anschluss nicht im Service-Bereich liegt, dann Beenden des Anrufs nach Mitteilung an den anrufenden Anschluss, dass der Anschluss nicht im Service-Bereich liegt, durch Abspielen eines Hinweis-Tons an den anrufenden Anschluss oder
wenn der ausgewählte Anruf-Beantwortungs-Modus die Beantwortung ist, dass der Anschluss besetzt ist, dann Beenden des Anrufs nach Mitteilung an den anrufenden Anschluss, dass der Anschluss besetzt ist, durch Abspielen eines Hinweis-Tons an den anrufenden Anschluss oder
wenn der Anschluss das Beantworten des empfangenen Anrufs abweist, automatische Beantwortung, bitte auflegen, an den anrufenden Anschluss.

6. Verfahren nach Anspruch 1, wobei das Verfahren weiterhin umfasst:
wenn das Ergebnis der vorausgehenden Beurteilung direkte Verbindung oder direkte automatische Beantwortung ist, dann direktes Verbinden des empfangenen Anrufs an den Anschluss oder automatische Beantwortung des empfangenen Anrufs gemäß der Anruf-Beantwortungs-Strategie;
wobei, wenn das direkte Verbinden gescheitert ist oder die Beantwortung des Anrufs, welcher mit dem Anschluss direkt verbunden worden ist, gescheitert ist, dann automatische Beantwortung des empfangenen Anrufs gemäß der Anruf-Beantwortungs-Strategie.

7. Verfahren nach Anspruch 4 oder 6, wobei automatische Beantwortung des empfangenen Anrufs gemäß der Anruf-Beantwortungs-Strategie umfasst:
Abstimmung einer Anruf-Beantwortungs-Strategie in der konfigurierten Anruf-Beantwortungs-Strategie;
Mitteilen dem anrufenden Anschluss von dem entsprechenden speziellen Inhalt des Anruf-Beantwortungs-Modus von der abgestimmten Anruf-Beantwortungs-Strategie; und
Beenden des Anrufs.

8. Einrichtung zur Anruf-Steuerung, basierend auf einem intelligenten Netzwerk, wobei die Einrichtung umfasst:
ein Konfigurations-Modul (10), konfiguriert zum Konfigurieren einer Anruf-Beantwortungs-Strategie für einen Anschluss, wenn der Anschluss der angerufene Teilnehmer ist, wobei die Anruf-Beantwortungs-Strategie einen Anruf-Beantwortungs-Modus umfasst; und
ein Modul (20) zur vorausgehenden Beurteilung, konfiguriert, wenn ein Anruf von dem Anschluss empfangen wird, zum Tätigen einer vorausgehenden Beurteilung an den empfangenen Anruf gemäß der Anruf-Beantwortungs-Strategie,
**dadurch gekennzeichnet, dass** die Einrichtung weiterhin umfasst:
ein Antwort-Steuerungs-Verarbeitungs-Modul (30), konfiguriert zum Beantworten des empfangenen Anrufs gemäß einem Anruf-Beantwortungs-Modus, eingegeben von einem Benutzer, über die Bedienung des Anschlusses, wenn das Ergebnis der vorausgehenden Beurteilung von dem Modul zur vorausgehenden Beurteilung Auswählen durch den Anschluss ist.

9. Einrichtung nach Anspruch 8, wobei das Antwort-Steuerungs-Verarbeitungs-Modul (30) umfasst:
eine Anrufversuch-Einheit (301), konfiguriert zum externen Anruf des Anschlusses durch Nehmen einer System-Nummer, konfiguriert in dem Konfigurations-Modul als anrufender Teilnehmer; und
eine Antwort-Umsetzungs-Einheit (302), konfiguriert zur automatischen Beantwortung des empfangenen Anrufs gemäß der Anruf-Beantwortungs-Strategie, wenn der externe Anruf gescheitert ist oder Beantworten davon gescheitert ist; weiterhin konfiguriert zum Abspielen eines Hinweis-Tons an den Anschluss zum Mitteilen desselben von der Information von einem anrufenden Anschluss des empfangenden Anrufs und verfügbarer Anruf-Beantwortungs-Modi, wenn der Anschluss den externen Anruf beantwortet; zum Empfangen eines ausgewählten Anruf-Beantwortungs-Modus, eingegeben durch einen Benutzer über die Bedienung des Anschlusses und zum Beantworten des anrufenden Anschlusses und Verarbeiten des empfangenen Anrufs gemäß dem ausgewählten Anruf-Beantwortungs-Modus.

10. Einrichtung nach Anspruch 9, wobei die Antwort-Umsetzungs-Einheit (302) weiterhin konfiguriert ist zum Verbinden eines Sprach-Kanals zwischen dem anrufenden Anschluss und dem Anschluss zum Tätigen eines Anrufs, wenn der ausgewählte Anruf-Beantwortungs-Modus direkt verbunden ist; oder
die Antwort-Umsetzungs-Einheit (302) weiterhin konfiguriert ist zum Umleiten des Sprach-Kanals von dem empfangenen Anruf zu einem Sprach-Mailbox-Service, wenn der ausgewählte Anruf-Beantwortungs-Modus Umleiten zu der Sprach-Mailbox ist; oder
die Antwort-Umsetzungs-Einheit (302) weiterhin konfiguriert ist zum Verbinden, gemäß einer Ziel-Nummer, eingegeben von dem Benutzer über die Bedienung des Anschlusses, des Sprach-Kanals von dem empfangenen Anruf an einen Anschluss, entsprechend der Ziel-Nummer, wenn der ausgewählte Anruf-Beantwortungs-Modus Anruf-Übertragung ist; oder
die Antwort-Umsetzungs-Einheit (302) weiterhin konfiguriert ist zum Beenden des Anrufs nach Mitteilung dem anrufenden Anschluss, dass der Anschluss durch Abspielen eines Hinweis-Tons an den anrufenden Anschluss abgeschaltet wurde, wenn der ausgewählte Anruf-Beantwortungs-Modus Beantwortung des Anschlusses, dass der Anschluss abgeschaltet wurde, ist;
oder
die Antwort-Umsetzungs-Einheit (302) weiterhin konfiguriert ist, zum Beenden des Anrufs nach Mitteilung dem anrufenden Anschluss, dass der Anschluss nicht im Service-Bereich liegt, durch Abspielen eines Hinweis-Tons an den anrufenden Anschluss, wenn der ausgewählte Anruf-Beantwortungs-Modus Beantwortung des Anschlusses, dass er nicht im Service-Bereich liegt, ist;
oder
die Antwort-Umsetzungs-Einheit (302) weiterhin konfiguriert ist, zum Beenden des Anrufs nach Mitteilung dem anrufenden Anschluss, dass der Anschluss besetzt ist durch Abspielen eines Hinweis-Tons an den anrufenden Anschluss, wenn der ausgewählte Anruf-Beantwortungs-Modus eine Beantwortung ist, dass der Anschluss besetzt ist; oder
die Antwort-Umsetzungs-Einheit (302) weiterhin konfiguriert ist, um automatisch, bitte auflegen, an den anrufenden Anschluss zu antworten, wenn der Anschluss Beantwortung des empfangenen Anrufs abweist.

11. Einrichtung nach Anspruch 9, wobei die Antwort-Umsetzungs-Einheit (302) weiterhin konfiguriert ist zum direkten Verbinden des empfangenen Anrufs an den Anschluss oder automatische Beantwortung des empfangenen Anrufs gemäß der Anruf-Beantwortungs-Strategie, wenn das Ergebnis der vorausgehenden Beurteilung von dem Modul zur vorausgehenden Beurteilung das direkte Verbinden oder direkte automatische Beantworten ist;
wobei, wenn das direkte Verbinden gescheitert ist oder Beantwortung des Anrufs, welcher direkt verbunden ist, an den Anschluss gescheitert ist, die Antwort-Umsetzungs-Einheit weiterhin zum automatischen Beantworten des empfangenen Anrufs gemäß der Anruf-Beantwortungs-Strategie konfiguriert ist.

12. Einrichtung nach Anspruch 9 oder 11, wobei die Antwort-Umsetzungs-Einheit (302) weiterhin konfiguriert ist zum Übereinstimmen einer Anruf-Beantwortungs-Strategie in der konfigurierten Anruf-Beantwortungs-Strategie; und Beenden des Anrufs nach Mitteilung dem anrufenden Anschluss von dem entsprechenden speziellen Inhalt des Anruf-Beantwortungs-Modus der abgestimmten Anruf-Beantwortungs-Strategie.

13. Einrichtung nach Anspruch 8, wobei das Modul (20) zur vorausgehenden Beurteilung und das Antwort-Steuerungs-Verarbeitungs-Modul (30) durch einen Service Control Point (SCP) eines intelligenten Netzwerks verwirklicht werden.

## Revendications

1. Procédé pour commande d'appel basée sur un réseau intelligent, le procédé comprenant:
la configuration (S10) d'une stratégie de réponse aux appels pour un terminal lorsque le terminal est une partie appelée, la stratégie de réponse aux appels comprenant un mode de réponse aux appels; et
lorsqu'un appel dont la partie appelée est le terminal est reçu, l'exécution (S20) d'un pré-jugement sur l'appel reçu en fonction de la stratégie de réponse aux appels,
**caractérisé en ce que** le procédé comprend en outre:
si le résultat du pré-jugement est la sélection par le terminal, alors la réponse (S30) à l'appel reçu en fonction d'un mode de réponse aux appels entré par un utilisateur par l'intermédiaire de l'exploitation du terminal.

2. Procédé selon la revendication 1, dans lequel le mode de réponse aux appels comprend la connexion directe, le transfert d'appel, le renvoi à la boîte vocale, le fait de répondre que le terminal a été mis hors tension, le fait de répondre que le terminal n'est pas dans une zone de service, le fait de répondre que le terminal est occupé ; la stratégie de réponse aux appels comprend en outre des listes noires et blanches de partie appelante, un état de priorité et un temps effectif de mode de réponse aux appels, un numéro d'appel correspondant ou un segment de numéro du mode de réponse aux appels.

3. Procédé selon la revendication 1, dans lequel, lorsqu'un appel dont la partie appelée est le terminal est reçu, avant l'exécution d'un pré-jugement (S20) sur l'appel reçu en fonction de la stratégie de réponse aux appels, le procédé comprend en outre:
la configuration du démarrage de la commande de réponse aux appels du terminal pour être effective et sa durée effective ; et
la configuration d'un contenu de réponse spécifique du mode de réponse aux appels.

4. Procédé selon la revendication 2, dans lequel si le résultat du pré-jugement est la sélection par le terminal, alors la réponse (S30) à l'appel reçu en fonction d'un mode de réponse aux appels entré par un utilisateur par l'intermédiaire de l'exploitation du terminal comprend:
le fait de prendre un numéro de système configuré comme la partie appelante pour appeler le terminal de manière externe ;
si l'appel externe échoue ou la réponse audit appel échoue, alors le fait de répondre automatiquement à l'appel reçu en fonction de la stratégie de réponse aux appels;
si le terminal répond à l'appel externe, alors le fait de jouer une tonalité de repérage pour le terminal pour lui notifier les informations du terminal appelant de l'appel reçu et les modes de réponse aux appels disponibles ;
la réception du mode de réponse aux appels sélectionné entré par l'utilisateur par l'intermédiaire de l'exploitation du terminal ; et
le fait de répondre au terminal appelant et le traitement de l'appel reçu en fonction du mode de réponse aux appels sélectionné.

5. Procédé selon la revendication 4, dans lequel le fait de répondre au terminal appelant et le traitement de l'appel reçu en fonction du mode de réponse aux appels sélectionné comprend:
lorsque le mode de réponse aux appels sélectionné est la connexion directe, alors la connexion d'une voie de communication entre le terminal appelant et le terminal pour effectuer un appel; ou
lorsque le mode de réponse aux appels sélectionné est le renvoi à la boîte vocale, alors le renvoi de la voie de communication de l'appel reçu à un service de boîte vocale ; ou
lorsque le mode de réponse aux appels sélectionné est le transfert d'appel, alors la connexion, en fonction d'un numéro cible entré par l'utilisateur par l'intermédiaire de l'exploitation du terminal, de la voie de communication de l'appel reçu à un terminal correspondant au numéro cible ; ou
lorsque le mode de réponse aux appels sélectionné est le fait de répondre que le terminal a été mis hors tension, alors le fait de mettre fin à l'appel après la notification au terminal appelant que le terminal a été mis hors tension en jouant une tonalité de repérage au terminal appelant; ou
lorsque le mode de réponse aux appels sélectionné est le fait de répondre que le terminal n'est pas dans une zone de service, alors le fait de mettre fin à l'appel après la notification au terminal appelant que le terminal n'est pas dans une zone de service en jouant une tonalité de repérage pour le terminal appelant; ou
lorsque le mode de réponse aux appels sélectionné est le fait de répondre que le terminal est occupé, alors le fait de mettre fin à l'appel après la notification au terminal appelant que le terminal est occupé en jouant une tonalité de repérage au terminal appelant; ou
lorsque le terminal refuse de répondre à l'appel reçu, le fait de répondre automatiquement de bien vouloir raccrocher au terminal appelant.

6. Procédé selon la revendication 1, dans lequel le procédé comprend en outre:
si le résultat du pré-jugement est la connexion directe connecte ou la réponse automatique directe, alors la connexion directe de l'appel reçu au terminal ou la réponse automatique à l'appel reçu en fonction de la stratégie de réponse aux appels;
dans lequel, si la connexion directe échoue ou la réponse à l'appel qui est connecté directement au terminal échoue, alors la réponse automatique à l'appel reçu en fonction de la stratégie de réponse aux appels.

7. Procédé selon la revendication 4 ou 6, dans lequel la réponse automatique à l'appel reçu en fonction de la stratégie de réponse aux appels comprend:
la mise en correspondance d'une stratégie de réponse aux appels dans la stratégie de réponse aux appels configurée ;
la notification au terminal appelant du contenu spécifique correspondant du mode de réponse aux appels de la stratégie de réponse aux appels mise en correspondance ; et
la fin de l'appel.

8. Appareil pour commande d'appel basée sur un réseau intelligent, l'appareil comprenant:
un module de configuration (10), configuré pour configurer une stratégie de réponse aux appels pour un terminal lorsque le terminal est la partie appelée, la stratégie de réponse aux appels comprenant un mode de réponse aux appels; et
un module de pré-jugement (20), configuré pour, lorsqu'un appel en provenance du terminal est reçu, effectuer un pré-jugement sur l'appel reçu en fonction de la stratégie de réponse aux appels,
**caractérisé en ce que** l'appareil comprend en outre:
un module de traitement de commande de réponse (30), configuré pour répondre à l'appel reçu en fonction d'un mode de réponse aux appels entré par un utilisateur par l'intermédiaire de l'exploitation du terminal lorsque le résultat du pré-jugement du module de pré-jugement est la sélection par le terminal.

9. Appareil selon la revendication 8, dans lequel le module de traitement de commande de réponse (30) comprend:
une unité de tentative d'appel (301), configurée pour appeler le terminal de manière externe en prenant un numéro de système configuré dans le module de configuration comme la partie appelante; et
une unité de mise en oeuvre de réponse (302), configurée pour répondre automatiquement à l'appel reçu en fonction de la stratégie de réponse aux appels lorsque l'appel externe échoue ou que sa réponse échoue ; en outre configurée pour jouer une tonalité de repérage au terminal pour lui notifier les informations d'un terminal appelant de l'appel reçu et les modes de réponse aux appels disponibles lorsque le terminal répond à l'appel externe ; pour recevoir un mode de réponse aux appels sélectionné entré par un utilisateur par l'intermédiaire de l'exploitation du terminal ; et pour répondre au terminal appelant et traiter l'appel reçu en fonction du mode de réponse aux appels sélectionné.

10. Appareil selon la revendication 9, dans lequel l'unité de mise en oeuvre de réponse (302) est en outre configurée pour connecter une voie de communication entre le terminal appelant et le terminal pour effectuer un appel lorsque le mode de réponse aux appels sélectionné est la connexion directe ; ou
l'unité de mise en oeuvre de réponse (302) est en outre configurée pour renvoyer la voie de communication de l'appel reçu à un service de boîte vocale lorsque le mode de réponse aux appels sélectionné est le renvoi à la boîte vocale ; ou
l'unité de mise en oeuvre de réponse (302) est en outre configurée pour connecter, en fonction d'un numéro cible entré par l'utilisateur par l'intermédiaire de l'exploitation du terminal, la voie de communication de l'appel reçu à un terminal correspondant au numéro cible lorsque le mode de réponse aux appels sélectionné est le transfert d'appel; ou
l'unité de mise en oeuvre de réponse (302) est en outre configurée pour mettre fin à l'appel après la notification au terminal appelant que le terminal a été mis hors tension en jouant une tonalité de repérage au terminal appelant lorsque le mode de réponse aux appels sélectionné est le fait de répondre que le terminal a été mis hors tension ; ou
l'unité de mise en oeuvre de réponse (302) est en outre configurée pour mettre fin à l'appel après la notification au terminal appelant que le terminal n'est pas dans une zone de service en jouant une tonalité de repérage au terminal appelant lorsque le mode de réponse aux appels sélectionné est le fait de répondre que le terminal n'est pas dans une zone de service ; ou
l'unité de mise en oeuvre de réponse (302) est en outre configurée pour mettre fin à l'appel après la notification au terminal appelant que le terminal est occupé en jouant une tonalité de repérage au terminal appelant lorsque le mode de réponse aux appels sélectionné est le fait de répondre que le terminal est occupé ; ou
l'unité de mise en oeuvre de réponse (302) est en outre configurée pour répondre automatiquement de bien vouloir raccrocher au terminal appelant lorsque le terminal refuse de répondre à l'appel reçu.

11. Appareil selon la revendication 9, dans lequel l'unité de mise en oeuvre de réponse (302) est en outre configurée pour connecter directement l'appel reçu au terminal ou répondre automatiquement à l'appel reçu en fonction de la stratégie de réponse aux appels lorsque le résultat du pré-jugement du module de pré-jugement est la connexion directe ou la réponse automatique directe ;
dans lequel, si la connexion directe échoue ou la réponse à l'appel qui est connecté directement au terminal échoue, l'unité de mise en oeuvre de réponse est en outre configurée pour répondre automatiquement à l'appel reçu en fonction de la stratégie de réponse aux appels.

12. Appareil selon la revendication 9 ou 11, dans lequel l'unité de mise en oeuvre de réponse (302) est en outre configurée pour mettre en correspondance une stratégie de réponse aux appels dans la stratégie de réponse aux appels configurée ; et mettre fin à l'appel après la notification au terminal appelant du contenu spécifique correspondant du mode de réponse aux appels de la stratégie de réponse aux appels mise en correspondance.

13. Appareil selon la revendication 8, dans lequel le module de pré-jugement (20) et le module de traitement de commande de réponse (30) sont réalisés par un point de commande de services (SCP) d'un réseau intelligent.
